# EUROPÄISCHE PATENTSCHRIFT

(11) **EP 3 987 194 B1**
(45) Veröffentlichungstag und Bekanntmachung des Hinweises auf die Patenterteilung: **09.08.2023**
(21) Anmeldenummer: 20733994.6
(22) Anmeldetag: 19.06.2020
(51) Int. Cl.: F16D 55/224

(54) **AKTUATORVORRICHTUNG**
ACTUATOR DEVICE
MÉCANISCME D'ACTUATION

(30) Priorität: 19.06.2019 DE 102019116623
(43) Veröffentlichungstag der Anmeldung: 27.04.2022
(73) Patentinhaber: KNORR-BREMSE Systeme für Schienenfahrzeuge GmbH, 80809 München (DE)
(72) Erfinder: LOEBNER, Reinhard, 81829 München (DE)
(86) Internationale Anmeldenummer: PCT/EP2020/067156
(87) Internationale Veröffentlichungsnummer: WO 2020/254610

(56) Entgegenhaltungen:
- EP-A1- 2 376 318
- EP-B1- 2 376 318
- DE-A1- 10 218 112
- DE-A1-102009 049 817
- US-A- 4 553 644
- US-A1- 2010 163 351

## Beschreibung

Die vorliegende Erfindung betrifft eine Vorrichtung, welche als Aktuator zur Erzeugung einer Bewegung in Längsrichtung der Vorrichtung durch das Einwirken eines Fluiddrucks auf die Vorrichtung verwendet werden kann, wobei der Aktuator bei Abnahme des Fluiddrucks die Bewegung in Längsrichtung rückgängig macht. Es betrifft insbesondere eine Vorrichtung, welche als Aktuator in einem hydraulischen Bremssystem eines Fahrzeugs verwendet werden kann.

Üblicherweise werden Fahrzeuge heutzutage häufig mit Scheibenbremsen ausgestattet, welche über ein hydraulisches oder pneumatisches Bremssystem gesteuert werden. Diese Kombination stellt eine Möglichkeit dar, den Bremsdruck gut und sicher zu dosieren und somit die auf das Fahrzeug wirkende Bremskraft zu steuern. Zur Durchführung einer Bremsung wird in einem Bremszylinder ein Druck auf einen Bremskolben aufgebracht, der vorgesehene Bremsbeläge an eine Bremsscheibe anlegt, welche fest mit einem Rad des Fahrzeugs verbunden ist. Durch die entstehende Reibung zwischen Bremsscheibe und Bremsbelägen kann das Fahrzeug gebremst werden. Je höher dabei der Druck (Bremsdruck) auf den Bremskolben wirkt, desto größer wird die Reibung zwischen Bremsbelag und Bremsscheibe und desto stärker ist die Verzögerung. Das bauliche Element bestehend aus Bremszylinder und dem sich darin axial beweglichen Bremskolben wird als Bremsaktuator bezeichnet.

Wird der auf den Bremskolben wirkende Bremsdruck reduziert bzw. vollständig entfernt, wird der Bremskolben in die Ausgangsstellung zurückgeführt. Dies geschieht in der Regel über eine vorgespannte Feder, die beim Betätigen der Bremse mittels des Bremsdrucks auf den Bremskolben vorgespannt wird. Durch das Zurückführen des Bremskolbens wird der Kontakt zwischen Bremsbelag und Bremsscheibe wieder gelöst und die Bremswirkung wird aufgehoben.

Einen wichtigen Bestandteil dieses Mechanismus stellen dabei Dichtungen dar, die zwischen Bremskolben und dem Bremszylinder angeordnet sind. Es handelt sich dabei um dynamisch wirksame Dichtungen, die sicherstellen, dass der auf den Bremskolben aufgebrachte Bremsdruck nicht zwischen Bremszylinder und Bremskolben entweichen kann. Durch insbesondere die Bewegung des Bremskolbens und dem auf die Dichtungen wirkenden Druck, sind diese jedoch einer hohen Belastung ausgesetzt, was einen hohen Verschleiß der Dichtungen nach sich zieht. Ein Austausch der Dichtungen ist aufgrund deren Funktionsweise zwischen Bremszylinder und Bremskolben mit vergleichsweise hohem Aufwand verbunden.

In diesem Zusammenhang offenbart die US 4 553 644 A eine Vorrichtung, die einen hydraulischen Betätigungsaktuator, der einem Reibungselement zugeordnet ist und durch eine unter Druck stehende Flüssigkeit betätigt werden kann, um das Reibungselement in Reibungskontakt mit einer zu bremsenden Komponente zu bringen, und ein pneumatisches Betätigungsmittel, das eine hydraulische Kammer, die mit dem hydraulischen Betätigungselement verbunden ist, und eine pneumatische Kammer, die mit einer Druckgasquelle verbunden werden kann, enthält, umfasst, wobei die zwei Kammern getrennt sind durch eine bewegliche Wandstruktur, die einen Kolben bildet, und wobei die Hydraulikkammer zumindest teilweise durch eine flexible elastische Umhüllung definiert ist, die in unmittelbarer Nähe des hydraulischen Betätigungsaktuators angeordnet ist.

Vor diesem Hintergrund ist es Aufgabe der vorliegenden Erfindung einen Aktuator bereit zu stellen, der durch Einwirken eines Fluiddrucks eine Bewegung in eine Richtung, beispielsweise seiner Längsrichtung, verursacht und diese bei Wegfall des Fluiddrucks selbstständig wieder rückgängig macht, ohne dabei sich bewegende Dichtungen zu benötigen.

Diese Aufgabe wird mit einer Vorrichtung gemäß des Hauptanspruchs gelöst. Vorteilhafte Weiterbildungen der Erfindung sind in den Unteransprüchen enthalten.

Die erfindungsgemäße Vorrichtung weist einen entlang einer Längsachse ausgebildeten Körper auf, der eine Mantelfläche aufweist, welche sich um die Längsachse des Körpers erstreckt und einen Hohlraum bildet. Die Längsachse des Körpers entspricht also auch der Längsachse der Mantelfläche und des Hohlraums. Zudem weist die Vorrichtung eine den Hohlraum auf der einen Stirnseite dichtend abschließende stirnseitige Begrenzung auf. Ferner weist die Mantelfläche eine vorbestimmte eingeprägte Elastizität, vorzugsweise in Richtung ihrer Längsachse, auf. Die Elastizität wird dabei als Eigenschaft der Mantelfläche verstanden unter Krafteinwirkung ihre Form zu verändern ohne sich dabei plastisch zu verformen und bei Wegfall der einwirkenden Kraft in die Ursprungsform zurückzukehren, wie beispielsweise von einer Spiralfeder bekannt. Die Elastizität der Mantelfläche entspricht dabei der Federsteifigkeit einer in einem oben beschriebenen herkömmlichen Bremsaktuator verwendeten Feder, die den Bremskolben nach Wegfall des Bremsdrucks in die Ausgangsposition bringt. Der Begriff der eingeprägten Elastizität ist in diesem Zusammenhang auf eine durch die Materialauswahl und/oder durch die Formgebung eingebrachte Elastizität, wie beispielsweise bei der Einbringung von

Gelenkfedern oder einer später nochmals aufgegriffenen Wellrohrfeder, gerichtet. Weiterhin ist die Vorrichtung derart konfiguriert, dass die der Seite mit der stirnseitigen Begrenzung gegenüberliegende Stirnseite des Hohlraums mit einem anderen Bauteil abgedichtet verbunden werden kann, sodass der Hohlraum von der Umgebung abgedichtet ist, selbst wenn sich die Vorrichtung verformt und eine Bewegung in Längsrichtung verursacht.

Durch Zufuhr von Energie, beispielsweise eine Beaufschlagung mit Druck, also einer Druckeinwirkung als Krafteinwirkung, vorzugsweise auf die stirnseitige Begrenzung der Vorrichtung, kann eine Längung beziehungsweise Stauchung der Vorrichtung erzielt werden, insbesondere aufgrund einer so vorbegebenen Formgebung der Mantelfläche, dass sie eine Bewegung der Aktuatorvorrichtung ermöglicht, wodurch eine Bewegung in Längsrichtung des Aktuators erfolgt. Aufgrund der Elastizität der Mantelfläche in Richtung der Längsachse der Vorrichtung kehrt die Vorrichtung nach der Wegnahme der äußeren Energiezufuhr wieder in ihre ursprüngliche Gestalt zurück. Die vom Aktuator induzierte Bewegung geht also erfindungsgemäß mit einer elastischen Verformung der Vorrichtung einher, vorzugsweise in Form von Längung oder Stauchung, sodass keine dynamischen Dichtungen notwendig sind, und die Möglichkeit besteht, die zum Isolieren des aufgebrachten Drucks von der Umgebung notwendigen Dichtungen derart vorzusehen, dass sie selbst keinen Bewegungen ausgesetzt sind und lediglich eine statische Beanspruchung erfahren und ihr Verschleiß daher deutlich verringert wird. Die Aktuatorvorrichtung ist derart ausgestaltet, dass durch eine Krafteinwirkung entgegen der vorbestimmten Elastizität eine Längung oder Stauchung zur Aufhebung einer Aktuatorfunktion erfolgt. Die Aktuatorvorrichtung ist dabei dazu konfiguriert, nach Wegfall der Krafteinwirkung durch vorgesehene Rückstellkräfte aufgrund der Elastizität die Ausgangsabmessungen der Aktuatorvorrichtung zum Ausüben der Aktuatorfunktion wiederherzustellen. Demnach kann die Aktuatorvorrichtung als passive Aktuatorvorrichtung bezeichnet werden, deren Aktuatorfunktion ausgeübt wird, wenn die Aktuatorvorrichtung nicht durch eine Krafteinwirkung entgegen der vorbestimmten Elastizität ausgehen von einer vorbestimmten Initialabmessung gelängt oder gestaucht wird. Eine Initialabmessung korrespondiert zu einer Ausgangsabmessung ohne Verformungsanteile oder lediglich mit solchen Verformungsanteilen, die einer Vorspannung der Aktuatorvorrichtung dienen, nicht aber zur Ausübung und Aufhebung der Aktuatorfunktion im eigentlichen Betrieb vorgesehen sind. Im Sinne einer passiven Aktuatorvorrichtung ist die Krafteinwirkung zur Längung oder Stauchung auf die Aufhebung gerichtet. Die Krafteinwirkung kann jedoch ergänzend zur Ausübung einer Sekundäraktuatorfunktion genutzt werden. Somit wird durch bedarfsgerechte Aufhebung der Aktuatorfunktion gleichzeitig eine Sekundäraktuatorfunktion ausgeführt, die beispielsweise durch eine Bewegung der Aktuatorvorrichtung in Richtung der Längsachse durch Längung oder Stauchung oder durch eine Fluidaufnahme oder -abgabe und somit Beeinflussung anderer fluidisch verbundener Komponenten bedingt sein kann. Ungeachtet der weiteren Ausübung einer optionalen Sekundäraktuatorfunktion kann über die vorstehend beschriebene passive Aktuatorvorrichtung insbesondere auch eine Aktuatorfunktion immer gewährleistet sein, auch wenn eine Krafteinwirkung, wie über eine Fluidzuleitung, eine Funktionsstörung aufweist. Dies ist gerade für sicherheitsrelevante Anwendungen vorteilhaft.

In einer Ausgestaltung ist die Aktuatorvorrichtung dazu konfiguriert, eine Kraft auf das Fahrzeugbremssystem aufzubringen bzw. davon zu lösen.

Die Aufbringung der Kraft auf das Fahrzeugbremssystem entspricht dabei der Ausübung Aktuatorfunktion, die durch die Krafteinwirkung zur Längung oder Stauchung der Aktuatorvorrichtung aufgehoben wird. Mit anderen Worten entspricht dabei die Aufhebung der Aktuatorfunktion einem Lösen der Kraft auf das Fahrzeugbremssystem. Die Aufhebung der Krafteinwirkung zur Längung oder Stauchung kann vollständig oder auch nur teilweise erfolgen, so dass die Aktuatorfunktion in ihrer Wirkung gesteuert ausübbar ist. Im Falle der Aufbringung einer Kraft auf das Fahrzeugbremssystem kann diese Kraft somit insbesondere zwischen einer maximalen Kraft bei vollständiger Aufhebung der Krafteinwirkung zur Längung oder Stauchung oder entsprechend anteilig einstellbar sein. Die Krafteinwirkung kann beispielsweise in Form einer Druckeinwirkung durch eine Druckbeaufschlagung erfolgen.

Insbesondere ist die Aktuatorvorrichtung dazu konfiguriert, ihre Aktuatorfunktion durch Längung der Aktuatorvorrichtung aufzuheben.

Durch die Längung kann beispielsweise in einfacher Weise eine auf einer der Längungsrichtung entgegengesetzten Seite der Aktuatorvorrichtung angeordnete Aktuatorfunktionskomponente von ihrer Position zur Ausübung der Aktuatorfunktion wegbewegt werden.

Gemäß einer Weiterbildung ist die Aktuatorvorrichtung dazu konfiguriert, nach zumindest teilweiser Aufhebung der Krafteinwirkung auf die stirnseitige Begrenzung des Hohlraums durch vorgesehene Rückstellkräfte aufgrund der Elastizität die Initialabmessungen der Aktuatorvorrichtung wiederherzustellen.

Die Aktuatorvorrichtung ist demnach so konzipiert, dass die Krafteinwirkung auf die stirnseitige Begrenzung des Hohlraums in Verbindung mit der durch die Mantelfläche bereitgestellten Elastizität maßgeblich für die Längung oder Stauchung der Aktuatorvorrichtung ist. Insbesondere kann die Elastizität auch derart vorbestimmt werden, dass auch bei nur teilweiser Aufhebung der Krafteinwirkung die Initialabmessungen der Aktuatorvorrichtung wiederherstellbar sind. Dies kann beispielsweise vorgespannte Aktuatorvorrichtungen betreffen, die beispielsweise mechanisch vorgelängt sind. Hier ist das zur weiteren Längung erforderliche Kraftniveau durch die Vorspannung erhöht. Zur Rückführung in den vorgespannten Ausgangszustand ist die Krafteinwirkung entsprechend zunächst nur auf das erhöhte Kraftniveau zu reduzieren.

In einer vorteilhaften Ausführungsform der Erfindung weist die Mantelfläche einen entlang ihrer Längsachse wellen- bzw. faltenbalgartigen Querschnitt auf, damit eine Längung oder Stauchung ermöglicht werden kann. Durch eine derartige Geometrie kann mit der entsprechenden Auswahl eines passenden Werkstoffes die notwendige Elastizität der Mantelfläche erzielt werden.

In einer vorteilhaften Ausführungsform hat die Mantelfläche eine im Querschnitt senkrecht ihrer Längsrichtung im Wesentlichen runde Form. Durch die um die Längsachse runde Form, kann im Falle eines Druckunterschiedes zwischen dem Hohlraum und einem die Vorrichtung umgebenden Fluid eine ausgeglichene Druckverteilung auf die Mantelfläche erreicht werden, was sich ebenfalls positiv auf den Verschleiß des Bauteils auswirkt.

In einer weiteren vorteilhaften Ausführungsform der Erfindung ist die Mantelfläche und damit der von ihr begrenzte Hohlraum im Wesentlichen rotationssymmetrisch. Auf diese Weise kann eine gleichmäßige Belastung der Mantelfläche erzielt werden, wodurch wiederum vorteilhafte Effekte hinsichtlich des Verschleißes der Vorrichtung erzielt werden können.

In einer vorteilhaften Ausführungsform der Erfindung ist der Hohlraum zwischen mindestens zwei ineinander angeordneten Mantelflächen gebildet. Insbesondere eine koaxiale Anordnung der ineinander angeordneten Mantelflächen ist anzustreben, um eine gleichmäßige Druckverteilung zu gewährleisten.

Gemäß einer Ausgestaltung wird die Mantelfläche zumindest abschnittsweise durch eine Wellrohrfeder gebildet.

Die Elastizität der Wellrohrfeder bedingt sich primär durch ihre Formgebung. Entsprechend können insbesondere auch starre Materialien eingesetzt werden, wobei das Rohr bzw. der Rohrabschnitt über den wellenförmig wechselnden Durchmesser und der dadurch bedingten Wellung ausreichend flexibel ist. Starre Materialien können dabei einen Schutz des Hohlraums vor äußeren Einflüssen und/oder Krafteinwirkungen und somit der Aktuatorvorrichtung verbessern. Zudem können starre Materialien verbesserte Befestigungsmöglichkeiten und/oder Dichteigenschaften bieten. Hinsichtlich produktionstechnischer Belange und/oder der zu erzielenden elastischen Verformungslänge kann die Wellrohrfeder die Mantelfläche vollständig ausbilden. Die Wellrohrfeder kann aber auch nur abschnittsweise vorgesehen werden, um beispielsweise die Stabilität in anderen Abschnitten oder insgesamt durch Reduzierung der Verformungslänge zu erhöhen.

In einer weiteren vorteilhaften Ausführungsform der Erfindung ist die Vorrichtung derart konfiguriert, dass sich durch Ausleitung eines Fluids aus dem Hohlraum die Abmessung der Vorrichtung entlang der Längsachse verringern oder durch Einleitung eines Fluids in den Hohlraum die Abmessung der Vorrichtung entlang der Längsachse vergrößern

Auf diese Weise kann eine Bewegung der Vorrichtung entlang der Längsachse in Abhängigkeit eines Drucks gesteuert werden. Insbesondere erfolgt die Krafteinwirkung bzw. Druckbeaufschlagung zur Längung oder Stauchung über den Hohlraum, also von innen. Die Mantelfläche dichtet dabei den Hohlraum gegenüber der äußeren Umgebung ab, so dass zur fluidischen Druckbeaufschlagung keine weiteren dichtenden Gehäuse erforderlich sind, wie dies bei einer Druckbeaufschlagung von außen der Fall sein kann.

Wird die Vorrichtung als Bremsaktuator in einem oben beschriebenen Bremssystem eingesetzt, kann die durch eine Einleitung eines Fluids indizierte Bewegung dazu verwendet werden, den Bremsbelag der Scheibenbremse von der entsprechenden Bremsscheibe wegzubewegen. Die Aktuatorfunktion wird gemäß der Längung durch die Druckbeaufschlagung aufgehoben.

Der Hohlraum der Vorrichtung kann dazu konfiguriert sein, nicht nur mit Über-, sondern auch mit Unterdruck beaufschlagt zu werden. Durch den beaufschlagten Druck lässt sich eine Längung der Vorrichtung bei Überdruck und/oder eine Stauchung bei Unterdruck erzielen, wodurch beispielsweise eine Längsbewegung eines Bremskolbens zur Betätigung einer Scheibenbremse, beispielsweise einer Aufhebung der Bremsung durch Längung der Mantelfläche, verursacht werden kann.

In einer weiteren vorteilhaften Ausführungsform der Erfindung steht die stirnseitige Begrenzung senkrecht auf der Längsachse des Hohlraumes. In einer derartigen Anordnung wirkt eine auf die stirnseitige Begrenzung einwirkende Energie zur Betätigung der Vorrichtung also in Richtung der Längsachse des Hohlraums und damit der Bewegungsrichtung der Vorrichtung. Auf diese Weise kann eine besonders effiziente Ausführungsform der Erfindung erzielt werden.

Weiterhin vorteilhaft ist eine Ausführungsform der Erfindung in der die stirnseitige Begrenzung und die Mantelfläche des Hohlraums nicht in einem Bauteil ausgeführt sind.

Dies ermöglicht einen modularen Aufbau der Aktuatorvorrichtung. Zudem kann ein komplexerer Aufbau der stirnseitigen Begrenzung und/oder Mantelfläche hierdurch fertigungstechnisch einfacher abbildbar sein. Alternativ ist aber auch eine einstückige Ausführung möglich. Auf diese Weise lässt sich eine einfache Bauart der Vorrichtung realisieren. Weiterhin können Dichtungen, die in anderen Ausführungsformen, in denen die stirnseitige Begrenzung und die Mantelfläche nicht in einem Bauteil ausgeführt sind, notwendig sind und damit die Verwendung von Verschleißteilen vermieden werden.

Die Vorrichtung kann dazu konfiguriert sein, als Aktuator in einem Bremssystem eingesetzt zu werden.

In einer Ausgestaltung ist die Aktuatorvorrichtung symmetrisch zur Längsachse des Hohlraums ausgeführt.

Durch die symmetrische Ausgestaltung der Aktuatorvorrichtung kann diese beispielsweise orientierungsunabhängiger verbaut werden.

In einem weiteren Aspekt ist die Erfindung auch auf eine Passivbremse mit einer vorstehend beschriebenen Aktuatorvorrichtung gerichtet, wobei die Passivbremse zumindest eine Bremsscheibe aufweist, und wobei die Aktuatorvorrichtung mittelbar oder unmittelbar mit einem Bremsbelag in Wirkverbindung steht und den Bremsbelag mit einer vorbestimmten Bremskraft gegen die Bremsscheibe drückt, wenn die Aktuatorvorrichtung gegenüber ihren Ausgangsabmessungen in axialer Richtung in Bezug auf die Längsachse nicht verformt, insbesondere nicht verlängert wird.

Über die Aktuatorvorrichtung wird der Bremsbelag somit solange mit vorbestimmter Bremskraft gegen die Bremsscheibe gedrückt, bis die Bremskraft aktiv durch Aufbringen einer Krafteinwirkung, insbesondere einer fluidischen Druckbeaufschlagung, verformt, insbesondere gelängt wird, um den Bremsbelag von der Bremsscheibe zu lösen. Die Aktuatorfunktion liegt dabei in der Aufbringung der Bremskraft durch Andrücken des Bremsbelags an die Bremsscheibe. Entsprechend wird die Aktuatorfunktion durch die aktive Krafteinwirkung aufgehoben.

In einer Ausgestaltung die weist Passivbremse einen Sattelrahmen auf, der an zumindest einer Schwimmlagerung, insbesondere an zwei der Bremsscheibe senkrecht zur Längsachse gegenüberliegenden Schwimmlagerungen, gelagert ist, und wobei der Sattelrahmen einen Bremsbelag aufweist, der auf einer zu der mit der Aktuatorvorrichtung verbundenen Bremsbelag abgewandten Seite der Bremsscheibe angeordnet ist und mit einer vorbestimmten Bremskraft gegen die Bremsscheibe drückt, wenn die Aktuatorvorrichtung gegenüber ihren Ausgangsabmessungen in axialer Richtung in Bezug auf die Längsachse nicht verformt, insbesondere nicht verlängert wird.

Die vorstehende Ausgestaltung mit einer Schwimmlagerung ermöglicht die Ausübung und Aufhebung der Aktuatorfunktion für zwei Bremsbeläge zu beiden Seiten der Bremsscheibe über eine Aktuatorvorrichtung. Entsprechend kann eine kompakte Bauweise realisiert werden.

Mittels der Erfindung kann zusammengefasst eine bauliche Einheit konfiguriert werden, die aus einem elastischen Material in der geometrischen Grundgestalt beispielsweise eines Wellrohres gefertigt werden, die mit einer axial fest eingespannten und einer zweiten axial beweglichen, verschlossenen Seite versehen ist und die durch Zuführung und Entnahme eines Fluides mit Druck beaufschlagt und entlastet werden kann. Die Zuführung von Druck und damit Volumen (Energie) führt auf Grund der geometrischen Gestalt zu einer axialen Längung der Einheit in Kombination mit einer Übertragung eben dieser Energie in die Formänderung des Werkstoffes der beschriebenen Einheit. Durch Druckabsenkung im Fluidkreislauf kommt es zur Volumenabnahme und Rückverformung der Einheit; diese kann als mechanische Kraft bzw. Energie zur Betätigung mechanischer Vorgänge zur Wirkung gebracht werden, z.B. wie bereits erwähnt der Zuspannung einer mechanischen Bremsbetätigungseinrichtung. Ebenso kann die Rückförderung des Fluides gegen ein Druckgefälle zum Antrieb einer (anderen) hydraulischen Maschine genutzt werden.

Dadurch können beispielsweise Bremsaktuatoren bereitgestellt werden, ohne bewegte und druckbeaufschlagte Dichtungen verwenden zu müssen. Vielmehr sind nur noch statische, druckbeaufschlagte Dichtungen erforderlich. Dadurch entfällt der Verschleiß dieser "bewegten" Dichtungen und die Einsatzzeit dieser Geräte erhöht sich maßgeblich.

Im Folgenden wird die Erfindung anhand verschiedener Ausführungsbeispiele, welche in den beigefügten Zeichnungen dargestellt sind, näher erläutert. Die Zeichnungen zeigen im Einzelnen:
- **Figur 1**: zeigt eine erste Ausführungsform der Erfindung als Bremsaktuator in einer hydraulisch betätigten Scheibenbremse (Passivbremse) mit angelegten Bremsbelägen
- **Figur 2**: zeigt die Ausführungsform einer Scheibenbremse mit einem erfindungsgemäßen Bremsaktuator der Figur 1 mit gelösten Bremsbelägen
- **Figur 3**: zeigt eine weitere Ausführungsform der Erfindung als Bremsaktuator in einer anderen Ausführungsform einer hydraulisch betätigten Scheibenbremse (Passivbremse)
- **Figur 4**: zeigt eine Ausführungsform der Erfindung als Bremsaktuator in einer Ausführungsform einer hydraulisch betätigten Parkbremse (Passivbremse)
- **Figur 5**: zeigt eine weitere Ausführungsform der Erfindung als Bremsaktuator in einer weiteren Ausführungsform einer hydraulisch betätigten Parkbremse (Passivbremse)
- **Figur 6**: zeigt eine Ausführungsform einer hydraulisch betätigten Parkbremse (Passivbremse) mit einer Ausführungsform zweier erfindungsgemäßer Vorrichtungen als Bremsaktuatoren
- **Figur 7**: zeigt eine Prinzipskizze einer weiteren Ausführungsform hydraulisch betätigten Parkbremse (Passivbremse) mit drei erfindungsgemäßen Vorrichtungen als Bremsaktuatoren
- **Figur 8**: zeigt eine Ausführungsform der Erfindung in einer weiteren Ausführungsform einer hydraulisch betätigten Scheibenbremse (Passivbremse) mit einer Bremszange
- **Figur 9**: zeigt eine Ausführungsform der erfindungsgemäßen Vorrichtung in einer weiteren Ausführungsform einer hydraulisch betätigten Scheibenbremse (Passivbremse) mit einer Bremszange

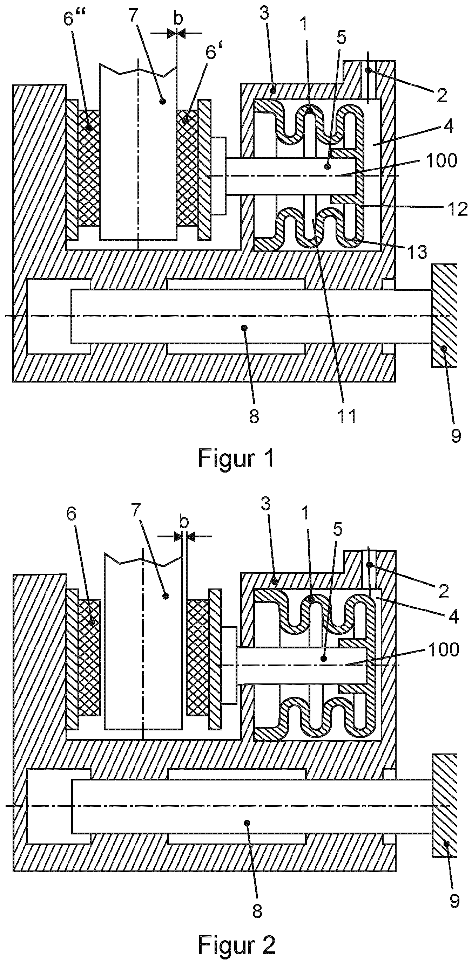

**Figur 1** zeigt eine Ausführungsform der erfindungsgemäßen Vorrichtung als Bremsaktuator in einer hydraulisch betätigten Scheibenbremse. Die erfindungsgemäße Vorrichtung wird im Folgenden als Wellrohrfeder bezeichnet. Bei dem gezeigten Bremssystem handelt es sich um eine Sattelbremse eines Fahrzeugs. Diese weist eine Bremsscheibe 7 auf, die fest mit einem Rad des Fahrzeugs (nicht dargestellt) verbunden ist und deren Rotation und damit die Rotation des Rades durch das Anlegen zweier Bremsbeläge 6' und 6" gebremst werden soll. Das Belagfreispiel b zwischen der Bremsscheibe 7 und den beiden Bremsbelägen 6' und 6" ist in der in Figur 1 abgebildeten Stellung der Bremse gleich null. Die Bremsbeläge 6' und 6" liegen also an der Bremsscheibe 7 mit einer vorbestimmten Bremskraft an.

Der Sattelrahmen 3 ist an einer Schwimmlagerung 8 derart gelagert, dass er axial auf der Schwimmlagerung 8 verschiebbar, aber nicht drehbar ist. Die Schwimmlagerung 8 ist anhand der Verbindung 9 mit dem Fahrzeug verbunden. Innerhalb des Sattelrahmens 3 ist eine Kammer 4 ausgebildet, die sich auf der einen Seite der Bremsscheibe 7 befindet. Im Inneren der Kammer 4 ist eine Wellrohrfeder 1 angeordnet. Innerhalb der Wellrohrfeder 1 wiederum befindet sich entlang einer Längsachse 100 der Wellrohrfeder ein Verschleißnachsteller 5, der aus der Kammer 4 des Sattelrahmens 3 hinausragt und mit einem Bremsbelag 6" in Verbindung steht. Der Verschleißnachsteller 5 ist dafür vorgesehen einen Verschleiß der Bremsbeläge 6' und 6", der durch die Reibung an der Bremsscheibe 7 entsteht, über Längenänderung auszugleichen und fungiert gleichzeitig als Bremskolben, der den in Zeichnungsebene rechten Bremsbelag 6' bewegt. Der Verschleißnachsteller 5 spannt die Mantelfläche 13 in axialer Richtung über eine Längung derart vor, dass die Bremsbeläge 6' und 6" auch bei Verschleiß noch mit einer vorbestimmten Mindestbremskraft an der Bremsscheibe 7 anliegen. Die Kammer 4 verfügt weiterhin über einen Hydraulikanschluss 2, über den ein Druck p in die Kammer 4 ein- und ausgeleitet werden kann.

Die Wellrohrfeder 1 besteht aus einer stirnseitigen Begrenzung 12 und einer Mantelfläche 13, die einen Hohlraum 11 definieren und ist derart angeordnet, dass deren stirnseitige Begrenzung 12 in der Zeichnungsebene rechts in der Kammer 4 angeordnet ist und den Verschleißnachsteller 5 an dessen gegenüber vom rechten Bremsbelag 6' liegenden Ende in einer dafür vorgesehenen Einfassung aufnimmt. Die der stirnseitigen Begrenzung 12 gegenüberliegende Stirnseite der Wellrohrfeder ist offen und liegt an der linken Seite der Kammer 4 dichtend am Sattelrahmen 3 an und ist mit der Wand der Kammer 4 an dieser Stelle fest verbunden, sodass der durch die Mantelfläche 13 und der Stirnseitigen Begrenzung 12 gebildete Hohlraum 11 von der Kammer 4 isoliert ist. Die Wellrohrfeder ist aus einem Material gefertigt, sodass sie durch die Wellenform der Mantelfläche 13 eine vorbestimmte Elastizität in Längsrichtung aufweist.

Im dargestellten Zustand, wird die Kammer 4 über den Hydraulikanschluss 2 nicht mit einem Druck beaufschlagt, wodurch keine Kraft auf die stirnseitige Begrenzung 12 der Wellrohrfeder 1 in Zeichenebene in Richtung der Längsachse 100wirkt.

**Figur 2** zeigt die Ausführungsform der Wellrohrfeder 1 in der gleichen Scheibenbremse wie in Figur 1. In Figur 2 ist dabei die Wellrohrfeder 1 mit einem negativen Druck p- in der Kammer 4 beaufschlagt. Aufgrund des auf die Wellrohrfeder 1 in Richtung ihrer Längsachse wirkenden Unterdrucks dehnt sich die Wellrohrfeder aus und betätigt dadurch den Verschleißnachsteller, wodurch die Bremsbeläge 6' und 6" von der Bremsscheibe 7 gelöst werden. Das Belagfreispiel b zwischen Bremsscheibe 7 und den Bremsbelägen 6' und 6" ist somit größer als 0 und somit wird keine Bremswirkung erzielt. Die Aktuatorfunktion wird somit aufgehoben.

Wird der negative Druck p- in der Kammer 4 und damit auf die stirnseitige Begrenzung 12 der Wellrohrfeder 1 aufgehoben, wird die Wellrohrfeder 1 durch ihre Elastizität in ihre Initialabmessung zurückgeführt und der Bremsbelag 6' wieder an die Bremsscheibe 7 angelegt, wie in Figur 1 dargestellt. Aufgrund der schwimmenden Lagerung des Sattelrahmens 3 an der Schwimmlagerung 8 wird durch das Anlegen des rechten Bremsbelags 6', der direkt durch die Wellrohrfeder 1 betätigt wird, ebenfalls eine Kraft erzeugt, die den linken Bremsbelag 6" auf der gegenüberliegenden Seite der Bremsscheibe 7 an die Bremsscheibe 7 anlegt.

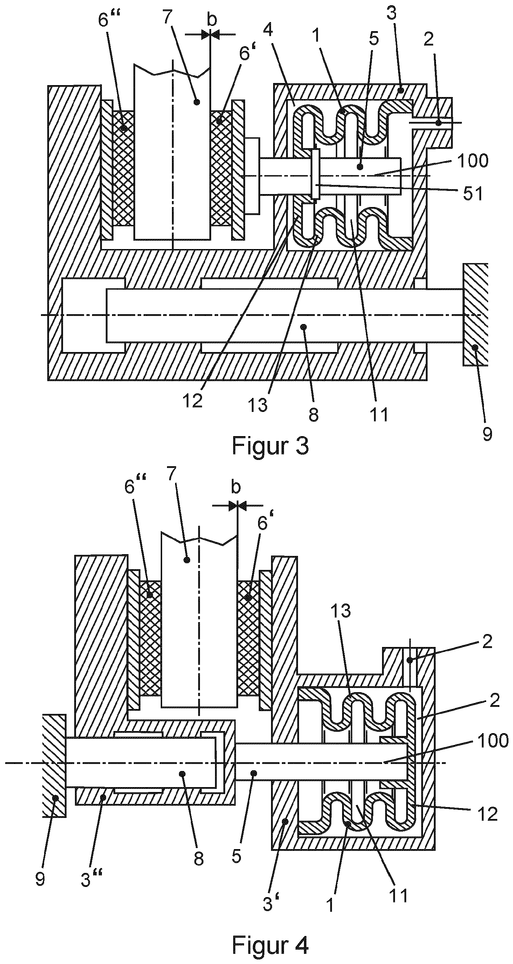

**Figur 3** zeigt eine weitere Ausführungsform der Wellrohrfeder 1 in der hydraulisch betätigten Scheibenbremse, die in den vorherigen Figuren gezeigt ist. Es wird daher darauf verzichtet auf die Ausführungsform der Scheibenbremse erneut detailliert einzugehen, die Ausführungen zu den Figuren 1 und 2 gelten entsprechend.

In dieser Ausführungsform des Bremsaktuators ist die Wellrohrfeder 1 um 180° gedreht in der Kammer 4 des Sattelrahmens 3 angeordnet. Dies bedeutet dass die stirnseitige Begrenzung der Wellrohrfeder 1 sich in dieser Ausführungsform in Zeichenebene auf der linken Seite befindet, und die entgegengesetzte offene Stirnseite der Wellrohrfeder 1 dichtend und unbeweglich an der rechten Wand der Kammer 4 angeordnet ist. Des Weiteren befindet sich der Hydraulikanschluss 2 an einer Stelle in der Kammer 4, sodass ein Druck in den Hohlraum 11 der Wellrohrfeder 1 geleitet wird. Zudem weist die stirnseitige Begrenzung 12 eine Öffnung auf, durch die der Verschleißnachsteller 5 in den Hohlraum 11 der Wellrohrfeder 1 hineinragt. Die Kontaktfläche zwischen Verschleißnachsteller 5 und Wellrohrfeder 1 an der stirnseitigen Begrenzung 12 des Hohlraums 11 ist dabei derart ausgeführt, dass der Hohlraum 11 der Wellrohrfeder 1 von der sie umgebenden Kammer 4 isoliert ist. Die Mantelfläche 13 wird hier nicht über den Verschleißnachsteller 5 vorgespannt. Ohne weitere Druckbeaufschlagung wird der Bremsbelag 6' über die Wellrohrfeder 1 mit einer vorbestimmten Kraft gegen die Bremsscheibe gedrückt, wie in Figur 3 dargestellt. Die Aktuatorvorrichtung übt somit ihre Aktuatorfunktion aus.

Wird nun der Hohlraum 11 über den Hydraulikanschluss 2 mit einem negativen Druck p-beaufschlagt, wird die Wellrohrfeder 1 entlang ihrer Symmetrieachse gestaucht, also die Längsachse 100 des Verschleißnachstellers 5, sodass der Verschleißnachsteller 5 in seiner Längsrichtung in Zeichenebene nach rechts verschoben wird, bis der rechte Bremsbelag 6' nicht mehr an der Bremsscheibe 7 anliegt. Gleichzeitig wird eine Kraft auf den Sattelrahmen 3 und damit auf die linke Bremsscheibe 6" ausgeübt, bis diese ebenfalls nicht mehr an der Bremsscheibe 7 anliegt. Wird der Druck p- im Hohlraum 11 der Wellrohrfeder 1 wieder reduziert, verschiebt sich die stirnseitige Begrenzung 12 der Wellrohrfeder 1 in Zeichenebene nach links und bewegt dabei über einen Vorsprung 51 am Verschleißnachsteller 5 diesen ebenfalls in Zeichenebene nach links und kann somit den Kontakt zwischen den Bremsbelägen 6', 6" und der Bremsscheibe 7 wiederherstellen.

**Figur 4** zeigt eine weitere Ausführungsform einer hydraulisch betätigten Scheibenbremse (Sattelbremse). Bei dieser Ausführungsform handelt es sich um eine Parkbremse bzw. ebenfalls um eine Passivbremse. Dies bedeutet, dass die Bremsbeläge an der Bremsscheibe anliegen, wenn kein Bremsdruck auf den Bremsaktuator ausgeübt wird. Die Bremswirkung ist also maximal, wenn der Bremsaktuator nicht betätigt wird, das heißt kein Bremsdruck auf die stirnseitige Begrenzung 12 wirkt.

In dieser Ausführungsform ist der Sattelrahmen 3 der Sattelbremse zweigeteilt in einen ersten Teil 3' und einen zweiten Teil 3". Im ersten Teil 3' des Sattelrahmens befindet sich die Kammer 4, in der eine Wellrohrfeder 1 als Bremsaktuator analog zur in Figur 1 gezeigten Anordnung angeordnet ist. Der Hydraulikanschluss 2 ist ebenfalls wie in Figur 1 so angeordnet, dass die Wellrohrfeder 1 von außen mit Druck beaufschlagt werden kann.

Anders als in der Ausführung in Figur 1 bewegt der Verschleißnachsteller 5 nicht direkt einen der beiden Bremsbeläge 6', 6", sondern den an einer Schwimmlagerung 8 schwimmend gelagerten zweiten Teil 3" des Sattelrahmens. Jeweils einer der beiden Bremsbeläge 6', 6" ist an einem Teil des Sattelrahmens angeordnet. In der dargestellten Stellung liegen die Bremsbeläge 6#, 6" an der Bremsscheibe 7 an, sodass das Belagfreispiel b also gleich null ist.

Wird über den Hydraulikanschluss 2 die Kammer 4 und somit auch die stirnseitige Begrenzung 12 der Wellrohrfeder 1 mit Druck beaufschlagt, so wird die Wellrohrfeder 1 entlang der Längsachse 100 gegen die Elastizität der Mantelfläche 13 der Wellrohrfeder 1 zusammengedrückt, sodass der Verschleißnachsteller 5 eine in Zeichenebene nach links gerichtete Kraft auf den zweiten Teil 3" des Sattelrahmens ausübt, während der Druck den ersten Teil 3' des Sattelrahmens eine in Zeichenebene nach rechts gerichtete Kraft erfährt. Dadurch werden die Bremsbeläge 6', 6" von der Bremsscheibe 7 abgehoben und das Belagfreispiel b vergrößert sich auf einen Betrag größer als null. Die Bremse ist somit gelöst und es ist keine Bremswirkung vorhanden. Wird der Druck aus der Kammer 4 wieder entfernt, dehnt sich die Wellrohrfeder 1 aufgrund der Elastizität der Mantelfläche 13 wieder in Längsrichtung des Verschleißnachstellers 5 aus, wodurch die Bremsbeläge 6 wieder an die Bremsscheibe 7 gedrückt werden, wodurch wiederum erneut die maximale Bremswirkung erreicht wird.

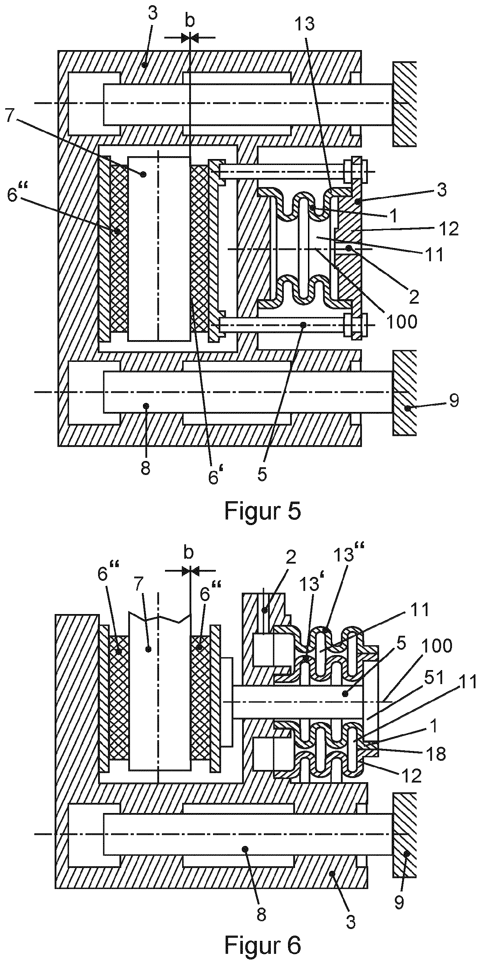

Eine andere Bauart einer Passivbremse ist in **Figur 5** gezeigt. Bei dieser Bauart ist der Sattelrahmen 3 an zwei Schwimmlagerungen 8 gelagert, die auf gegenüberliegenden Seiten der Bremsscheibe 7 angeordnet sind. Ein wesentlicher Unterschied stellt ebenfalls die in dieser Bauart vorgesehene Ausführungsform der Wellrohrfeder 1 als Bremsaktuator dar. Im Unterschied zu den zuvor beschriebenen Ausführungsformen, ist die Wellrohrfeder 1 nicht in einer Kammer des Sattelrahmens 3 angeordnet. Zudem sind in dieser Ausführungsform die Mantelfläche 13 und die stirnseitige Begrenzung 12 der Wellrohrfeder 1 nicht in einem Bauteil ausgeführt. Die stirnseitige Begrenzung 12 ist in Zeichenebene rechts mit der rechten Stirnseite der Mantelfläche 13 dichtend verbunden. Die linke Stirnseite der Wellrohrfeder 1 ist analog zu den in den zuvor gezeigten Ausführungsformen derart mit dem Sattelrahmen 3 verbunden, dass der Hohlraum 11 der Wellrohrfeder 1 gegen die Umgebung abgedichtet ist. Weiterhin sind an den beiden abgebildeten Außenbereichen der stirnseitigen Begrenzung 12 der Wellrohrfeder 1, die über den Umfang der Wellrohrfeder 1 hinausragen, jeweils ein Verschleißnachsteller 5 angeordnet, die mit dem Bremsbelag 6' verbunden sind. Zudem weißt die stirnseitige Begrenzung 12 einen Hydraulikanschluss 2 auf, über den der Hohlraum 11 der Wellrohrfeder 1 mit Druck p beaufschlagt werden kann. Der andere Bremsbelag 6" ist, wie in den zuvor beschriebenen Ausführungsformen mit dem Sattelrahmen 3 fest verbunden. Die Bremse ist derart konfiguriert, dass in der Ausgangsstellung die Bremsbeläge 6' und 6" an der Bremsscheibe 7 anliegen.

Wird der Hohlraum 11 der Wellrohrfeder 1 über den Hydraulikanschluss 2 mit einem Druck p beaufschlagt, so dehnt sich die Wellrohrfeder 1 entlang ihrer Längsachse 100 aus, wodurch die stirnseitige Begrenzung 12 in Zeichenebene nach rechts bewegt wird, und diese über die beiden Verschleißnachsteller 5 die Bewegung an den rechten Bremsbelag 6' überträgt. Gleichzeitig wird über die Stirnseite der Wellrohrfeder 1, die mit dem Sattelrahmen 3 verbunden ist, durch den Druck p im Hohlraum 11 eine Kraft auf den Sattelrahmen 3 hervorgerufen, durch die sich der gesamte Sattelrahmen 3 anhand der Schwimmlagerung 8 in Zeichenebene nach links bewegt, wodurch der an dem Sattelrahmen 3 angeordnete (in Zeichenebene der Linke) Bremsbelag 6" ebenfalls nach links bewegt wird. Somit werden beide Bremsbeläge 6' und 6" bei Druckbeaufschlagung des Hohlraums 11 von der Bremsscheibe 7 gelöst und das Belagfreispiel b zwischen Bremsbelägen 6', 6" und der Bremsscheibe 7 wächst auf einen Wert größer als 0.

**Figur 6** zeigt eine weitere Bauart einer Passivbremse mit einer Doppelwellrohrfeder 1 als Bremsaktuator. Sie weist einen an einer Schwimmlagerung 8 gelagerten Sattelrahmen 3 auf, an dem der in Zeichenebene linke Bremsbelag 6' montiert ist. Die Schwimmlagerung 8 ist analog wie die in den zuvor beschriebenen Bauarten über die Verbindung 9 mit einem Fahrzeug verbunden.

Die Doppelwellrohrfeder 1 als Bremsaktuator setzt sich aus einer runden Mantelfläche mit größerem Durchmesser 13' und einer runden Mantelfläche mit kleinerem Durchmesser 13" zusammen, die jeweils eine vorbestimmte Elastizität in Längsrichtung (Richtung der Längsachse 100) der Wellrohrfeder 1 aufweisen. Die Mantelfläche mit kleinerem Durchmesser 13" ist dabei koaxial mit der Mantelfläche mit größerem Durchmesser 13' angeordnet. Die stirnseitige Begrenzung 12 der Doppelwellrohrfeder 1 wird durch radial nach innen gezogene Enden der äußeren Mantelfläche 13' und radial nach außen gezogene Enden der inneren Mantelfläche 13" gebildet. Die jeweiligen radial nach innen bzw. außen gezogenen Enden sind an einer umlaufenden Flanschstelle 18, welche sich parallel zur Längsrichtung der Wellrohrfeder 1 erstreckt, dichtend miteinander verbunden. Die der stirnseitigen Begrenzung 12 gegenüberliegende Stirnseite der Mantelflächen 13' und 13" sind derart mit dem Sattelrahmen 3 verbunden, dass ein abgedichteter Hohlraum 4 entsteht, der sich um die Längsachse 100 der Wellrohfeder 1 erstreckt.

Der Hydraulikanschluss 2 ist derart im Sattelrahmen 3 angeordnet, dass der Hohlraum 11 der Doppelwellrohrfeder 1 mit einem Druck p beaufschlagt werden kann. Koaxial mit der Längsachse 100 der Wellrohrfeder 1 ist ein Verschleißnachsteller 5 angeordnet, der wie in den anderen bereits beschriebenen Bauarten ebenfalls als Kolben fungiert und somit mit dem in Zeichnungsebene rechten Bremsbelag 6' verbunden ist und diesen von der Bremsscheibe 7 abheben und anlegen kann. Der Verschleißnachsteller 5 ist weiterhin über einen Vorsprung 51 mit der umlaufenden stirnseitigen Begrenzung 12 der Wellrohrfeder 1 verbunden.

Wird der durch die Mantelflächen 13' und 13" gebildete Hohlraum 11 über den Hydraulikanschluss 2 mit dem Druck p beaufschlagt, längt sich die Doppelwellrohrfeder 1 entlang ihrer Längsachse 100, wodurch sich der Verschleißnachsteller 5 in Zeichenebene nach rechts und der Sattelrahmen 3 nach links bewegt. Dadurch werden die beiden Bremsbeläge 6' und 6" von der Bremsscheibe 7 getrennt und es entsteht ein Belagfreispiel b das einen größeren Wert als null aufweist, wodurch die Bremse gelöst ist.

Wird der Druck p wieder vom Hohlraum 11 entfernt, nimmt die Doppelrohrfeder 1 aufgrund ihrer Elastizität ihre Ursprungsform an und die Bremsbeläge 6' und 6" werden wieder an die Bremsscheibe 7 angelegt und somit eine Rotation der Bremsscheibe blockiert.

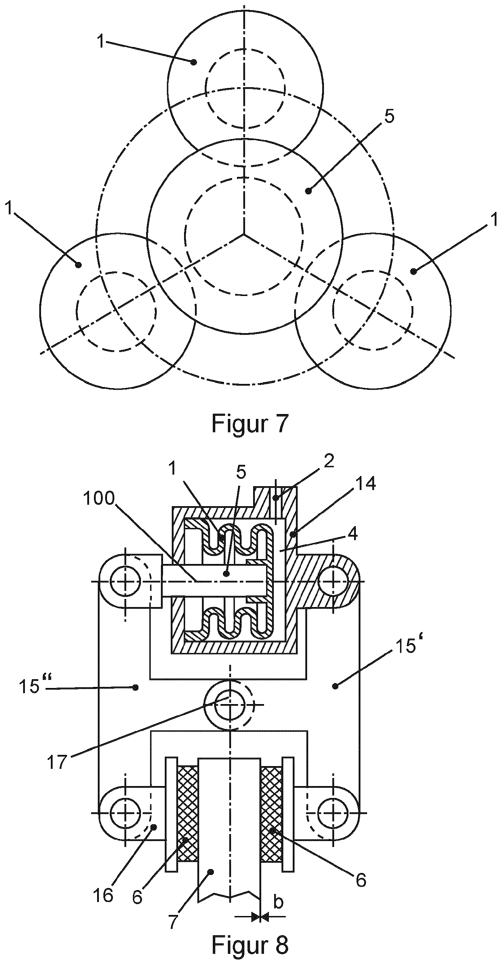

**Figur 7** zeigt eine Prinzipskizze einer weiteren Ausführungsform eines Bremsaktuators für eine Sattelbremse als Passivbremse. Die Anordnung dieser Ausführungsform ist dabei ähnlich wie die Anordnung von Figur 6. Anstelle zweier ineinandergeschobener Mantelflächen 13, wird in Figur 7 allerdings der zentral liegende Verschleißnachsteller 5 durch einzelne runde Wellrohrfedern 1, die radial verteilt um den Verschleißnachsteller 5 angeordnet sind, betätigt. Die Ansicht der Prinzipskizze aus Figur 7 ist dabei um 90 Grad im Vergleich zur Ansicht aus Figur 6 gedreht, sodass die Längsachse der Doppelwellrohrfeder 1 aus Figur 6 in Figur 7 in die Zeichenebene hineinzeigt.

Die Wellrohrfedern 1 werden alle synchron mit Druck versorgt und weisen alle die gleiche Elastizität in deren Längsrichtung (in die Zeichenebene hinein) auf. Werden die Wellrohrfedern mit Druck beaufschlagt, erfolgt eine gemeinsame Betätigung des Verschleißnachstellers 5 und somit der Bremsbeläge (in Figur 7 nicht abgebildet).

Analog zur Ausführungsform in Figur 6 wird bei Druckabfall durch die Elastizitäten der Wellrohrfedern 1 der Verschleißnachsteller 5 in die Ausgangsposition zurückgebracht und die Bremsbeläge wieder angelegt.

Neben den Sattelbremsen der bisherigen Ausführung ist eine erfindungsgemäße Vorrichtung ebenfalls in Ausführungsformen von Zangenbremsen möglich. **Figur 8** zeigt eine Bauart einer Zangenbremse in der eine erfindungsgemäße Wellrohrfeder als Bremsaktuator eingesetzt wird.

Die Bremsbeläge 6, die an der Bremsscheibe 7 angelegt sind, sind jeweils über einen Halter 16 mit zwei Zangenhebeln 15' und 15" verbunden. Diese weisen einen gemeinsamen Drehpunkt 17 auf, der in Zeichenebene oberhalb der Bremsscheibe 7 angeordnet ist. Darüber, auf der entgegengesetzten Seite der Bremsbeläge 6, ist zwischen den jeweiligen Enden der Zangenhebel 15' und 15" ein Aktuatorgehäuse 14 vorgesehen. Dieses ist auf der einen Seite (in Zeichnung rechts) drehbar mit dem rechten Zangenhebel 15' verbunden. Auf der anderen Seite führt aus dem Aktuatorgehäuse 14 ein Verschleißnachsteller 5, der an dem linken Zangenhebel 15" drehbar gelagert ist.

Innerhalb des Aktuatorgehäuses 14 ist eine Wellrohrfeder 1 mit einer festgelegten Federhärte als Bremsaktuator in einer Kammer 4 angeordnet. Die Anordnung der Wellrohrfeder 1 in der Kammer 4 ist dabei identisch mit der Anordnung der Wellrohrfeder 1 in der Kammer 4 der in den Figuren 1 und 2 dargestellten Ausführungsform. Außerdem ist am Aktuatorgehäuse 14 ebenfalls der Hydraulikanschluss 2 vorgesehen, über den die Kammer 4 mit einem negativen Druck p- beaufschlagt werden kann.

In der abgebildeten Stellung wirkt kein Druck in der Kammer 4, sodass die Bremsbeläge 6 an der Bremsscheibe 7 durch die Federkraft der Wellrohrfeder 1 anliegen und das Belagfreispiel b folglich gleich null ist. Wird die Kammer mit dem negativen Druck p-beaufschlagt, wirkt dieser auf die Wellrohrfeder 1 entlang ihrer Längsachse 100. Dadurch wirkt auf den Verschleißnachsteller 5 eine Kraft in die eine Richtung (nach rechts in Zeichenebene) und auf das Aktuatorgehäuse 14 die gleiche Kraft in die andere Richtung (nach links in Zeichenebene). Über die Zangenhebel 15' und 15" können somit die Kräfte auf die Bremsbeläge 6 geleitet und die Reibung zwischen Bremsscheibe 7 und Belägen 6 aufgehoben werden.

Sobald der negative Druck p- in der Kammer 4 wieder reduziert wird, wirkt auf den Verschleißnachsteller 5 durch die Wellrohrfeder 1 eine Kraft in die eine Richtung (nach links in Zeichenebene) und auf das Aktuatorgehäuse 14 die gleiche Kraft in die andere Richtung (nach rechts in Zeichenebene). Über die Zangenhebel 15' und 15" können somit die Kräfte auf die Bremsbeläge 6 geleitet und die Reibung zwischen Bremsscheibe 7 und Belägen 6 erhöht werden. Die Bewegung der Bremsbeläge 6 hin zur der Bremsscheibe 7 wird dabei durch die Elastizität der Wellrohrfeder 1 hervorgerufen.

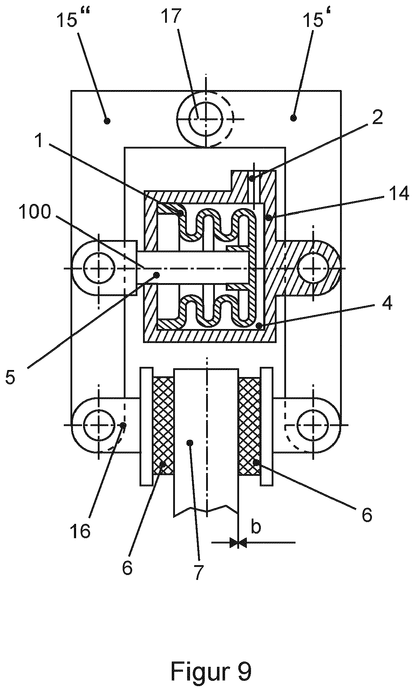

**Figur 9** zeigt eine ähnliche Anordnung einer Zangenbremse wie Figur 8. Auch hier sind die Bremsbeläge 6 über entsprechende Halter 16 mit jeweils einem Zangenhebel 15' bzw. 15" verbunden. Die Zangenhebel weisen analog zur Ausführung in Figur 8 einen gemeinsamen Drehpunkt 17 auf. Der Bremsaktuator ist auch hier in einem Aktuatorgehäuse 14 vorgesehen, in dem die Anordnung der Wellrohrfeder 1 und des Verschleißnachstellers 5 der Anordnung aus Figur 8 entspricht.

Im Gegensatz zur Anordnung in Figur 8 ist das Aktuatorgehäuse 14 allerdings zwischen dem gemeinsamen Drehpunkt 17 der Zangenhebel 15', 15" und den Bremsbelägen 6 angeordnet. Daraus ergibt sich, dass es sich bei dieser Anordnung um eine andere Bauform einer Passivbremse handelt, die ebenfalls im drucklosen Zustand eingebremst ist. In diesem Zustand drücken die Bremsbeläge 6 also mit maximaler Kraft auf die Bremsscheibe 7 und das Belagfreispiel b ist folglich null. Die maximale Kraft wird dabei ausschließlich durch die Elastizität der Mantelfläche der Wellrohrfeder 1 hervorgerufen.

Wird Druck über den Hydraulikanschluss 2 in die Kammer 4 geleitet, wird die Wellrohrfeder 1 innerhalb der Kammer 4 entlang ihrer Längsachse 100 komprimiert, wodurch sich über den Verschleißnachsteller 5 der linke Zangenhebel 15" in Zeichenebene nach links und der rechte Zangenhebel 15' in die entgegengesetzte Richtung bewegt. Dadurch wird das Belagfreispiel b zwischen den Bremsbelägen 6 und der Bremsscheibe 7 erhöht, wodurch die Wellrohrfeder gegen die Elastizität der Wellrohrfeder 1 in Längsrichtung gestaucht wird und die Bremsbeläge 6 somit von der Bremsscheibe 7 gelöst werden. Wird der Druck wiederum aus der Kammer 4 entlassen, bewegt sich der beschriebene Mechanismus aufgrund der durch die Elastizität der Wellrohrfeder 1 induzierten Kraft in die entgegengesetzte Richtung und die Bremsbeläge 6 liegen wieder an der Bremsscheibe 7 an.

Für die Funktion der Wellrohrfeder 1 in allen oben beschriebenen Ausführungsformen sind Dichtungen erforderlich, die den Hohlraum der Wellrohrfeder 1 von der Umgebung isolieren. Diese Dichtungen können allerdings im Gegensatz zu den Dichtungen im Stand der Technik so ausgeführt werden, dass sie bei der Beaufschlagung des Hohlraums bzw. der Umgebung nicht bewegt werden. Es handelt sich also im Gegensatz zum gängigen Stand der Technik um statische Dichtungen, die einen deutlich geringeren Verschleiß als bewegte druckbeaufschlagte Dichtungen aufweisen. Der verringerte Verschleiß führt somit zu einer maßgeblich erhöhten Einsatzzeit der Bremsaktuatoren ohne einen Austausch von Dichtungen.

### BEZUGSZEICHENLISTE

- 1: Wellrohrfeder
- 2: Hydraulikanschluss
- 3: Sattelrahmen
- 4: Kammer
- 5: Verschleißnachsteller
- 6: Bremsbeläge
- 6': rechter Bremsbelag
- 6": linker Bremsbelag
- 7: Bremsscheibe
- 8: Schwimmlagerung
- 9: Anbindung an das Fahrzeug
- 11: Hohlraum
- 12: stirnseitige Begrenzung
- 13: Mantelfläche
- 14: Aktuatorgehäuse
- 15': rechter Zangenhebel
- 15": linker Zangenhebel
- 16: Halter
- 17: Drehpunkt
- 51: Vorsprung
- 100: Längsachse der Mantelfläche
- b: Belagfreispiel
- p: Druck

## Patentansprüche

1. Aktuatorvorrichtung eines hydraulisch betätigbaren Fahrzeugbremssystems
aufweisend mindestens einen länglich ausgebildeten Körper mit einer Längsachse (100), aufweisend:
eine Mantelfläche (13), welche sich um seine Längsachse (100) erstreckt und einen Hohlraum (11) bildet,
eine stirnseitige Begrenzung (12), dazu konfiguriert den Hohlraum (11) an einer Stirnseite dichtend abzuschließen, wobei
die Mantelfläche (13), die eine vorbestimmte eingeprägte Elastizität in Längsrichtung aufweist, und
die Aktuatorvorrichtung dazu konfiguriert ist, an der der verschlossenen Stirnseite gegenüberliegenden Stirnseite abgedichtet mit einem anderen Bauteil derart verbunden zu sein, dass sich die Verbindung zwischen der Aktuatorvorrichtung und dem anderem Bauteil bei einer Bewegung der Aktuatorvorrichtung entlang der Längsachse (100) nicht löst und der durch die Mantelfläche (13) und die stirnseitige Begrenzung (12) definierte Hohlraum (11) vollständig von seiner Umgebung abgedichtet ist, **dadurch gekennzeichnet, dass** die Aktuatorvorrichtung durch Krafteinwirkung entgegen der vorbestimmten Elastizität zur Aufhebung einer Aktuatorfunktion elastisch gelängt oder gestaucht werden kann, und
wobei die Aktuatorvorrichtung dazu konfiguriert ist, nach Wegfall der Krafteinwirkung durch vorgesehene Rückstellkräfte aufgrund der Elastizität die Ausgangsabmessungen der Aktuatorvorrichtung zum Ausüben der Aktuatorfunktion wiederherzustellen.

2. Aktuatorvorrichtung gemäß dem vorherigen Anspruch, wobei die Aktuatorvorrichtung dazu konfiguriert ist, eine Kraft auf das Fahrzeugbremssystem aufzubringen bzw. davon zu lösen.

3. Aktuatorvorrichtung gemäß einem der vorherigen Ansprüche, wobei die Aktuatorvorrichtung dazu konfiguriert ist, ihre Aktuatorfunktion durch Längung der Aktuatorvorrichtung aufzuheben.

4. Aktuatorvorrichtung gemäß einem der vorherigen Ansprüche, wobei die Aktuatorvorrichtung dazu konfiguriert ist, nach zumindest teilweiser Aufhebung der Krafteinwirkung auf die stirnseitige Begrenzung (12) des Hohlraums (11) durch vorgesehene Rückstellkräfte aufgrund der Elastizität die Initialabmessungen der Aktuatorvorrichtung wiederherzustellen.

5. Aktuatorvorrichtung gemäß einem der vorherigen Ansprüche, wobei die Mantelfläche (13) entlang ihrer Längsachse (100) einen wellen- oder faltenbalgartigen Querschnitt aufweist.

6. Aktuatorvorrichtung gemäß einem der vorherigen Ansprüche, wobei die Mantelfläche (13) senkrecht zu ihrer Längsachse (100) einen im Wesentlichen runden Querschnitt aufweist.

7. Aktuatorvorrichtung gemäß einem der vorherigen Ansprüche, wobei die Mantelfläche (13) im Wesentlichen rotationssymmetrisch ist.

8. Aktuatorvorrichtung gemäß einem der vorherigen Ansprüche, wobei der Hohlraum (11) zwischen mindestens zwei ineinander angeordneten Mantelflächen (13), die insbesondere koaxial angeordnet sind, gebildet ist.

9. Aktuatorvorrichtung nach einem der vorherigen Ansprüche, wobei die Mantelfläche (13) zumindest abschnittsweise durch eine Wellrohrfeder gebildet wird.

10. Aktuatorvorrichtung gemäß einem der vorhergehenden Ansprüche, wobei die Vorrichtung dazu konfiguriert ist, durch Ausleitung eines Fluids aus dem Hohlraum (11) die Abmessung der Vorrichtung entlang der Längsachse (100) zu verringern oder durch Einleitung eines Fluids in den Hohlraum (11) die Abmessung der Vorrichtung entlang der Längsachse (100) zu vergrößern.

11. Aktuatorvorrichtung gemäß einem der vorherigen Ansprüche, wobei die stirnseitige Begrenzung (12) senkrecht auf der Längsachse (100) des Hohlraums (11) steht.

12. Aktuatorvorrichtung gemäß einem der vorherigen Ansprüche, wobei die mindestens eine Mantelfläche (13) und mindestens ein Teil der stirnseitigen Begrenzung (12) nicht in einem Bauteil ausgeführt sind.

13. Aktuatorvorrichtung gemäß einem der vorherigen Ansprüche, wobei die Vorrichtung symmetrisch zur Längsachse (100) des Hohlraums (11) ausgeführt ist.

14. Passivbremse mit einer Aktuatorvorrichtung gemäß einem der vorherigen Ansprüche, wobei die Passivbremse zumindest eine Bremsscheibe (7) aufweist, und wobei die Aktuatorvorrichtung mittelbar oder unmittelbar mit einem Bremsbelag (6') in Wirkverbindung steht und den Bremsbelag (6') mit einer vorbestimmten Bremskraft gegen die Bremsscheibe (7) drückt, wenn die Aktuatorvorrichtung gegenüber ihren Ausgangsabmessungen in axialer Richtung in Bezug auf die Längsachse (100) nicht verformt, insbesondere nicht verlängert wird.

15. Passivbremse gemäß dem vorherigen Anspruch, wobei die Passivbremse einen Sattelrahmen (3) aufweist, der an zumindest einer Schwimmlagerung (8), insbesondere an zwei der Bremsscheibe (7) senkrecht zur Längsachse (100) gegenüberliegenden Schwimmlagerungen (8), gelagert ist, und wobei der Sattelrahmen einen Bremsbelag (6") aufweist, der auf einer zu der mit der Aktuatorvorrichtung verbundenen Bremsbelag (6') abgewandten Seite der Bremsscheibe (7) angeordnet ist und mit einer vorbestimmten Bremskraft gegen die Bremsscheibe (7) drückt, wenn die Aktuatorvorrichtung gegenüber ihren Ausgangsabmessungen in axialer Richtung in Bezug auf die Längsachse (100) nicht verformt, insbesondere nicht verlängert wird.

## Claims

1. An actuator device of a hydraulically actuated vehicle brake system having at least one elongated body with a longitudinal axis (100), having:
a lateral surface (13) that extends about its longitudinal axis (100) and forms a cavity (11),
an end boundary (12) configured to close the cavity (11) at one end so as to form a seal,
the lateral surface (13) having a predetermined imposed elasticity in the longitudinal direction, and
the actuator device being configured to be connected to another component at the end facing the closed end so as to form a seal in such a manner that the connection between the actuator device and the other component is not released when the actuator device moves along the longitudinal axis (100), and the cavity (11) defined by the lateral surface (13) and the end boundary (12) being completed sealed off from its surroundings,
**characterised in that,**
the actuator device can be elastically elongated or compressed by the application of force against the predetermined elasticity in order to reverse an actuator function, and
the actuator device is configured such that, when the force ceases to be applied, in order to perform the actuator function it returns to its initial dimensions due to the restoring forces provided by its elasticity.

2. An actuator device according to the preceding claim, the actuator device being configured to apply and release a force on the vehicle brake system.

3. An actuator device according to any one of the preceding claims, the actuator device being configured to reverse its actuator function by elongating the actuator device.

4. An actuator device according to any one of the preceding claims, the actuator device being configured to return to its initial dimensions once the force on the end boundary (12) of the cavity (11) has at least partially ceased to be applied by the restoring forces provided by its elasticity.

5. An actuator device according to any one of the preceding claims, the lateral surface (13) having a wave- or bellows-shaped cross section along its longitudinal axis (100).

6. An actuator device according to any one of the preceding claims, the lateral surface (13) having a substantially circular cross section perpendicular to its longitudinal axis (100).

7. An actuator device according to any one of the preceding claims, the lateral surface (13) being substantially rotationally symmetrical.

8. An actuator device according to any one of the preceding claims, the cavity (11) being formed between at least two lateral surfaces (13) that are arranged one inside another, in particular coaxially one inside another.

9. An actuator device according to any one of the preceding claims, at least portions of the lateral surface (13) taking the form of a corrugated pipe spring.

10. An actuator device according to any one of the preceding claims, the device being configured to reduce the dimension of the device along the longitudinal axis (100) by channelling a fluid out of the cavity (11) or to increase the dimension of the device along the longitudinal axis (100) by channelling a fluid into the cavity (11).

11. An actuator device according to any one of the preceding claims, the end boundary (12) being perpendicular to the longitudinal axis (100) of the cavity (11).

12. An actuator device according to any one of the preceding claims, the at least one lateral surface (13) and at least a part of the end boundary (12) not being formed in a component.

13. An actuator device according to any one of the preceding claims, the device being configured symmetrically to the longitudinal axis (100) of the cavity (11).

14. A passive brake having an actuator device according to any one of the preceding claims, this passive brake having at least one brake disc (7), and the actuator device being directly or indirectly operatively connected to a brake pad (6') and pressing this brake pad (6') against the brake disc (7) with a predetermined brake force if the actuator device is not deformed, in particular is not elongated, in axial direction in relation to the longitudinal axis (100) of the cavity (11) when compared with its initial dimensions.

15. A passive brake according to the preceding claim, this passive brake having a calliper frame (3) that is mounted on at least one floating bearing, in particular on two floating bearings facing the brake disc (7) perpendicular to the longitudinal axis (100), and the calliper frame having a brake pad (6') that is arranged on a side of the brake disc (7) facing away from the brake pad (6') connected to the actuator device and pressing against the brake disc (7) with a predetermined brake force if the actuator device is not deformed, in particular is not elongated, in in axial direction in relation to the longitudinal axis (100) when compared to its initial dimensions.

## Revendications

1. Dispositif d'actionneur d'un système de frein de véhicule pouvant être actionné hydrauliquement, comportant au moins un corps de constitution oblong ayant un axe (100) longitudinal, comportant :
une surface (13) latérale, qui s'étend autour de son axe (100) longitudinal et qui forme un espace (11) creux,
une limitation (12) du côté frontal, configurée pour fermer l'espace (11) creux d'une manière étanche sur un côté frontal, dans lequel
la surface (13) latérale, qui a une élasticité marquée de manière déterminée à l'avance dans la direction longitudinale, et
le dispositif d'actionneur est configuré pour être relié, du côté frontal opposé au côté frontal fermé, d'une manière étanche à une autre pièce, de manière à ce que la liaison entre le dispositif d'actionneur et l'autre pièce ne cesse pas lors d'un déplacement du dispositif d'actionneur le long de l'axe (100) longitudinal, et de manière à ce que l'espace (11) creux, défini par la surface (13) latérale et la limitation (12) du côté frontal, soit rendu complètement étanche par rapport à son environnement, **caractérisé**
**en ce que** le dispositif d'actionneur peut, par l'effet d'une force s'opposant à l'élasticité déterminée à l'avance, être allongé élastiquement pour faire cesser une fonction d'actionneur ou être refoulé, et
dans lequel le dispositif d'actionneur est configuré pour, après la cessation de l'effet de la force, rétablir, par des forces de rappel prévues à l'avance en raison de l'élasticité, les dimensions initiales du dispositif d'actionneur pour exercer la fonction d'actionneur.

2. Dispositif d'actionneur suivant la revendication précédente, dans lequel le dispositif d'actionneur est configuré pour appliquer une force au système de frein du véhicule et pour l'en séparer.

3. Dispositif d'actionneur suivant l'une des revendications précédentes, dans lequel le dispositif d'actionneur est configuré pour faire cesser sa fonction d'actionneur par allongement du dispositif d'actionneur.

4. Dispositif d'actionneur suivant l'une des revendications précédentes, dans lequel le dispositif d'actionneur est configuré pour, après cessation au moins partielle de l'effet de la force sur la limitation (12) du côté frontal de l'espace (11) creux, rétablir, par des forces de rappel prévues à l'avance en raison de l'élasticité, les dimensions initiales du dispositif d'actionneur.

5. Dispositif d'actionneur suivant l'une des revendications précédentes, dans lequel la surface (13) latérale a, le long de son axe (100) longitudinal, une section transversale ondulée ou de type en soufflet à plis.

6. Dispositif d'actionneur suivant l'une des revendications précédentes, dans lequel la surface (13) latérale a, perpendiculairement à son axe (100) longitudinal, une section transversale sensiblement circulaire.

7. Dispositif d'actionneur suivant l'une des revendications précédentes, dans lequel la surface (13) latérale est sensiblement de révolution.

8. Dispositif d'actionneur suivant l'une des revendications précédentes, dans lequel l'espace (11) creux est formé entre au moins deux surfaces (13) latérales disposées l'une dans l'autre, qui en particulier sont coaxiales.

9. Dispositif d'actionneur suivant l'une des revendications précédentes, dans lequel la surface (13) latérale est formée au moins par endroits d'un ressort tubulaire ondulé.

10. Dispositif d'actionneur suivant l'une des revendications précédentes, dans lequel le dispositif est configuré pour, par sortie d'un fluide de l'espace (11) creux, diminuer la dimension du dispositif suivant l'axe (100) longitudinal, et par l'introduction d'un fluide dans l'espace (11) creux, agrandir la dimension du dispositif suivant la direction (100) longitudinale.

11. Dispositif d'actionneur suivant l'une des revendications précédentes, dans lequel la limitation (12) du côté frontal est perpendiculaire à l'axe (100) longitudinal de l'espace (11) creux.

12. Dispositif d'actionneur suivant l'une des revendications précédentes, dans lequel la au moins une surface (13) latérale et au moins une partie de la limitation (12) du côté frontal ne sont pas réalisées en une pièce.

13. Dispositif d'actionneur suivant l'une des revendications précédentes, dans lequel le dispositif est symétrique par rapport à l'axe (100) longitudinal de l'espace (11) creux.

14. Frein passif comprenant un dispositif d'actionneur suivant l'une des revendications précédentes, dans lequel le frein passif a au moins un disque (7) de frein, et dans lequel le dispositif d'actionneur est en liaison d'action directe ou indirecte avec une garniture (6') de frein et repousse la garniture (6') de frein avec une force de freinage déterminée à l'avance sur le disque (7) de frein, si le dispositif d'actionneur n'est pas déformé, en particulier n'est pas allongé dans la direction axiale par rapport à l'axe (100) longitudinal, par rapport à ses dimensions initiales.

15. Frein passif suivant la revendication précédente, dans lequel le frein passif a un cadre (3) d'étrier, qui est monté sur au moins un palier (8) flottant, en particulier sur deux paliers (8) flottants opposés au frein (7) à disque perpendiculairement à l'axe (100) longitudinal, et dans lequel le cadre d'étrier a une garniture (6'') de frein, qui est disposée d'un côté, loin de la garniture (6') de frein reliée au dispositif d'actionneur, du disque (7) de frein, et appuie, par une force de freinage déterminée à l'avance sur le disque (7) de frein, si le dispositif d'actionneur n'est pas déformé dans la direction axiale par rapport à l'axe (100) longitudinal par rapport à ses dimensions initiales en n'étant pas, en particulier allongé.
